# EUROPEAN PATENT APPLICATION

(11) **EP 4 838 632 A1**
(43) Date of publication of application: **11.11.2026**
(21) Application number: 25174561.8
(22) Date of filing: 06.05.2025
(51) Int. Cl.: H01M 10/6557, H01M 10/04, B60L 50/64, H01M 10/613, H01M 10/625, H01M 50/209

(54) **BATTERY SYSTEM AND VEHICLE INCLUDING THE SAME**

(71) Applicant: Samsung SDI Co., Ltd., Yongin-si, Gyeonggi-do 17084 (KR)
(72) Inventor: Bloder, Martin, 8261 Sinabelkirchen (AT); Rabanser, Mike, 8010 Graz (AT)
(74) Representative: Gulde & Partner

(57) **Abstract**

The present disclosure refers to a battery system (100), including a plurality of battery cells (12) arranged to form a cell stack (10), a cell stack frame (20) accommodating the cell stack (10) and exerting a pressure onto the cell stack (10), a cooling structure (40) including a plurality of cooling plates (42) each arranged between adjacent battery cells (12) of the plurality of battery cells (12), wherein each cooling plate (42) includes two plate elements (42a, 42b) with a cooling chamber (48) in-between for the feed-through of coolant, and a compression structure (50) arranged inside the cooling chamber (48), wherein the compression structure (50) is designed such that it is plastically deformed when receiving compression forces acting on the plate elements (42a, 42b) of the cooling plate (42).

## Description

### Field of the Disclosure

Embodiments of the present disclosure relates to a battery system better suited to compensate age-related cell swelling. Further, the present disclosure relates to a vehicle including such a battery system.

### Technological Background

Recently, vehicles for transportation of goods and peoples have been developed that use electric power as a source for motion. An electric vehicle is an automobile that is propelled permanently or temporarily by an electric motor, using energy stored in rechargeable batteries. The electric vehicle may be solely powered by batteries (Battery Electric Vehicle, BEV) or may include a combination of an electric motor and, for example, a conventional combustion engine (Plugin Hybrid Electric Vehicle, PHEV). BEVs and PHEVs use high-capacity rechargeable batteries, which are designed to give power for propulsion over sustained periods of time.

Generally, a rechargeable (or secondary) battery cell includes an electrode assembly including a positive electrode, a negative electrode, and a separator interposed between the electrodes. A solid or liquid electrolyte allows movement of ions during charging and discharging of the battery cell. The electrode assembly is located in a casing and electrode terminals, which are positioned on the outside of the casing, establish an electrically conductive connection to the electrodes. The shape of the casing may be, for example, cylindrical or rectangular shape.

A battery module is formed of a plurality of battery cells connected in series or in parallel. That is, the battery module is formed by interconnecting the electrode terminals of the plurality of battery cells depending on a required amount of power and in order to realize a relatively high-power rechargeable battery.

Battery modules can be constructed in either a block design or in a modular design. In the block design, each battery cell is coupled to a common current collector structure and a common battery management system, and the unit thereof is accommodated in a housing. In the modular design, pluralities of battery cells are connected together to form submodules and several submodules are connected together to form the battery module. In automotive applications, battery systems may include a plurality of battery modules connected together in series to provide a desired voltage.

A battery pack is a set of any number of (for example identical) battery modules or single battery cells. The battery modules, or respectively the battery cells, may be configured in a series, parallel, or a mixture of both to provide the desired voltage, capacity, and/or power density. Components of a battery pack include the individual battery modules and interconnects, which provide electrical conductivity between the battery modules.

Mechanical integration of a battery pack is achieved by appropriate mechanical connections between the individual components, for example, between the battery modules, and between them and a supporting structure of the vehicle. These connections should remain functional and save during the average service life of the battery system. Further, installation space and interchangeability specifications should be met, especially in mobile applications.

Mechanical integration of battery modules may be achieved by providing a carrier framework and by positioning the battery modules thereon. Fixing the battery cells or battery modules may be achieved by fitted depressions in the framework or by mechanical interconnectors such as bolts or screws. In some cases, the battery modules are confined by fastening side plates to lateral sides of the carrier framework. Further, cover plates may be fixed atop and below the battery modules.

The carrier framework of the battery pack is mounted to a carrying structure of the vehicle. When the battery pack is to be fixed at the bottom of the vehicle, the mechanical connection may be established from the bottom side by for example bolts passing through the carrier framework of the battery pack. The framework is generally made of aluminum or an aluminum alloy to reduce the overall weight of the construction.

A conventional battery system, despite any modular structure, usually includes a battery housing that acts as an enclosure to seal the battery system against the environment and provides structural protection of the battery system's components. Housed battery systems are usually mounted, as a whole into their application environment, e.g. an electric vehicle. Thus, the replacement of defective system parts, for example, a defective battery submodule, requires dismounting the entire battery system and removal of its housing first. Even defects of small and/or cheap system parts may require dismounting and replacement of the entire battery system and its separate repair. Because high-capacity battery systems are expensive, large, and heavy, the procedure is burdensome, and the storage, for example, in the mechanic's workshop, of the bulky battery system is difficult.

An active or passive thermal management system may be included to provide thermal control of the battery pack, to safely use the at least one battery module by efficiently emitting, discharging, and/or dissipating heat generated from its rechargeable batteries. If the heat emission, discharge, and/or dissipation is not sufficiently performed, temperature deviations may occur between respective battery cells, such that the at least one battery module may no longer generate a desired (or designed) amount of power. In addition, an increase of the internal temperature can lead to abnormal reactions occurring therein, and thus charging and discharging performance of the rechargeable battery deteriorates and the life-span of the rechargeable battery is shortened. Thus, cell cooling for effectively emitting, discharging, and/or dissipating heat from the cells is important.

Exothermic decomposition of cell components may lead to a so-called thermal runaway. Generally, a thermal runaway describes a process that accelerates due to increased temperature, in turn releasing energy that further increases temperature. Thermal runaway occurs in situations when an increase in temperature changes the conditions in a way that causes a further increase in temperature, often leading to a destructive result. In rechargeable battery systems, the thermal runaway is associated with strong exothermic reactions that are accelerated by temperature rise. In thermal runaway, the battery cell temperature rises incredibly fast and the energy stored is released very suddenly. In extreme cases, thermal runaway can cause battery cells to explode and start fire. In minor cases, it can cause battery cells to be damaged beyond repair.

When a battery cell is heated above a critical temperature (for example, above 150°C) the battery cell can transition into the thermal runaway. Generally, temperatures outside of the safe region on either the low or high side may lead to irreversible damage to the battery cell and therefore may possible trigger thermal runaway. Thermal runaway may also occur due to an internal or external short circuit of the battery cell or poor battery maintenance. For example, overcharging or rapid charging may lead to thermal runaway.

During thermal runaway, a failed battery cell may reach a temperature exceeding 700°C. Further, large quantities of hot gas are ejected from inside of the failed battery cell through the venting opening of the cell housing into the battery pack. The main components of the vented gas are H₂, CO₂, CO, electrolyte vapor and other hydrocarbons. The vented gas is therefore flammable and potentially toxic. The vented gas also causes a gas-pressure to increase inside the battery pack. In the worst case, the high temperatures lead to the process spreading to neighboring cells and fire in the battery pack. At this stage, the fire is hardly to extinguish.

The battery cells of a battery pack may be arranged to form a cell stack by stacking the battery cells onto each other or arranging the battery cells in a row and placing the cell stack within a cell stack frame. Neighboring battery cells of such a cell stack may be distanced from one another via cell spacers. To ensure optimal operation of the battery cells over their lifetime, it is important that a predefined pressure is exerted onto the battery cells by the cell stack frame to compensate for possible production tolerances and swelling of the battery cells.

Current battery systems typically include cell stack frames with end plates exerting pressure onto the cell stack, possibly via an end spacer, with a rigid linear or progressive elastic pressure characteristic. A disadvantage of such a rigid linear or progressive elastic pressure characteristic may be the susceptibility to length or positioning deviations because a small displacement may cause a steep increase or decrease of force applied on the cell stack, which in turn may reduce the stacks performance. To mitigate this, very precise and therefore expensive production tolerances have to be met, or other costly and intricate ways of adjusting the cell stacks pre-tension via positioning of the end plate during assembly have to be implemented. Such cell stack frames may not be able to ensure that the right amount of pressure is applied to the cell stack over its entire lifetime.

It may thus be an object of the present application to provide a battery system ensuring suitable pressure conditions as well as temperatures for optimal operation of the battery cells over their entire lifetime.

### Summary of Invention

The present disclosure is defined by the appended claims. The description that follows is subject to this limitation. Any disclosure lying outside the scope of the claims is only intended for illustrative as well as comparative purposes.

According to an aspect of the present disclosure, a battery system includes a plurality of battery cells arranged to form a cell stack, a cell stack frame accommodating the cell stack and exerting a pressure onto the cell stack, a cooling structure including a plurality of cooling plates each arranged between adjacent battery cells of the plurality of battery cells, wherein each cooling plate includes two plate elements with a cooling chamber in-between for the feed-through of coolant, and a compression structure arranged inside the cooling chamber, wherein the compression structure is designed such that it is plastically deformed when receiving compression forces acting on the plate elements of the cooling plate.

According to an aspect of the present disclosure, the cooling structure further includes curved connecting elements extending about end sides of the battery cells and interconnecting neighboring cooling plates of the plurality of cooling plates such that the cooling structure has a meandering form.

According to an aspect of the present disclosure, the cell stack frame includes an end plate exerting pressure onto the cell stack.

According to an aspect of the present disclosure, the end plate is shaped, at an inner side thereof facing an outermost one of the cooling plates, correspondingly to an adjacent side of the outermost cooling plate.

According to an aspect of the present disclosure, the cooling structure further includes a fluid inlet element arranged at a first end of the cell stack and a fluid outlet element arranged a second end of the cell stack, wherein the cooling structure is adapted for the feed-through of the coolant from the fluid inlet element, through the cooling chambers of the cooling plates and out of the fluid outlet element.

According to an aspect of the present disclosure, the cooling plates are extruded plates.

According to an aspect of the present disclosure, the cooling plates are made of aluminum.

According to an aspect of the present disclosure, the compression structure includes multiple struts distributed about the inner surfaces of the two plate elements and extending in-between the two plate elements.

According to an aspect of the present disclosure, the compression structure includes one or more of the following: compression elements having rectangular cross-sections, compression elements having bottle-neck shaped cross-sections, compression elements having semi-circular cross-sections, compression elements having tent-shaped cross-sections, compression elements having rhombus-shaped cross-sections, compression elements having rhombus-shaped cross-sections with circular end portions.

Yet another aspect of the present disclosure refers to an electric vehicle including the battery system according to any one of the preceding aspects.

Further aspects of the present disclosure could be learned from the dependent claims or the following description.

### Brief Description of the Drawings

Features will become apparent to those of ordinary skill in the art by describing in detail exemplary embodiments with reference to the attached schematic drawings in which:
- Fig. 1: illustrates a perspective view of a battery system according to an embodiment.
- Fig. 2: illustrates a top view of the battery system of Fig. 1.
- Fig. 3: illustrates a perspective view of the battery system of Fig. 1 with one of the end plates removed.
- Fig. 4: illustrates a meandering cooling structure of the battery system of Fig. 1.
- Fig. 5: illustrates a cross-section of a cooling plate of the cooling structure along the line A-A in Fig. 4 in three different stages of compression with a compression structure according to a first embodiment.
- Fig. 6: illustrates a cross-section of a cooling plate of the cooling structure along the line A-A in Fig. 4 in three different stages of compression with a compression structure according to a second embodiment.
- Fig. 7: illustrates a cross-section of a cooling plate of the cooling structure along the line A-A in Fig. 4 in three different stages of compression with a compression structure according to a third embodiment.
- Fig. 8: illustrates a cross-section of a cooling plate of the cooling structure along the line A-A in Fig. 4 in three different stages of compression with a compression structure according to a fourth embodiment.
- Fig. 9: illustrates a cross-section of a cooling plate of the cooling structure along the line A-A in Fig. 4 along with a detailed view of the compression structure according to a fifth embodiment.
- Fig. 10: illustrates a cross-section of a cooling plate of the cooling structure along the line A-A in Fig. 4 along with a detailed view of the compression structure according to a sixth embodiment.
- Fig. 11: illustrates a cross-section of a cooling plate of the cooling structure along the line A-A in Fig. 4 along with a detailed view of the compression structure according to a seventh embodiment.
- FIG. 12: illustrates a top view of a battery system according to another embodiment
- FIG. 13: illustrates a diagram showing a force to elongation (displacement) ratio for the battery systems according to the disclosure.

### Detailed Description of the Invention

Reference will now be made in detail to embodiments, examples of which are illustrated in the accompanying drawings. Effects and features of the exemplary embodiments, and implementation methods thereof will be described with reference to the accompanying drawings. In the drawings, like reference numerals denote like elements, and redundant descriptions are omitted. The present disclosure, however, may be embodied in various different forms, and should not be construed as being limited to only the illustrated embodiments herein. Rather, these embodiments are provided as examples so that this disclosure will be thorough and complete, and will fully convey the aspects and features of the present disclosure to those skilled in the art.

Accordingly, processes, elements, and techniques that are not considered necessary to those having ordinary skill in the art for a complete understanding of the aspects and features of the present disclosure may not be described. In the drawings, the relative sizes of elements, layers, and regions may be exaggerated for clarity.

As used herein, the term "and/or" includes any and all combinations of one or more of the associated listed items. Further, the use of "may" when describing embodiments of the present disclosure refers to "one or more embodiments of the present disclosure." In the following description of embodiments of the present disclosure, the terms of a singular form may include plural forms unless the context clearly indicates otherwise.

It will be understood that although the terms "first" and "second" are used to describe various elements, these elements should not be limited by these terms. These terms are only used to distinguish one element from another element. For example, a first element may be named a second element and, similarly, a second element may be named a first element, without departing from the scope of the present disclosure. As used herein, the term "and/or" includes any and all combinations of one or more of the associated listed items. Expressions such as "at least one of," when preceding a list of elements, modify the entire list of elements and do not modify the individual elements of the list.

As used herein, the term "substantially," "about," and similar terms are used as terms of approximation and not as terms of degree, and are intended to account for the inherent deviations in measured or calculated values that would be recognized by those of ordinary skill in the art. Further, if the term "substantially" is used in combination with a feature that could be expressed using a numeric value, the term "substantially" denotes a range of +/-5% of the value centered on the value.

It will be further understood that the terms "include," "comprise," "including," or "comprising" specify a property, a region, a fixed number, a step, a process, an element, a component, and a combination thereof but do not exclude other properties, regions, fixed numbers, steps, processes, elements, components, and combinations thereof.

It will also be understood that when a film, a region, or an element is referred to as being "above" or "on" another film, region, or element, it can be directly on the other film, region, or element, or intervening films, regions, or elements may also be present.

Herein, the terms "upper" and "lower" are defined according to the z-axis. For example, the upper cover is positioned at the upper part of the z-axis, whereas the lower cover is positioned at the lower part thereof. In the drawings, the sizes of elements may be exaggerated for clarity. For example, in the drawings, the size or thickness of each element may be arbitrarily shown for illustrative purposes, and thus the embodiments of the present disclosure should not be construed as being limited thereto.

Unless otherwise defined, all terms (including technical and scientific terms) used herein have the same meaning as commonly understood by one of ordinary skill in the art to which the present disclosure belongs. It will be further understood that terms, such as those defined in commonly used dictionaries, should be interpreted as having a meaning that is consistent with their meaning in the context of the relevant art and/or the present specification, and should not be interpreted in an idealized or overly formal sense, unless expressly so defined herein.

### General Concept

According to one aspect of the present disclosure, a battery system is provided. The battery system includes a plurality of battery cells, for example prismatic or pouch type battery cells. The battery cells are arranged to form a cell stack, for example by stacking the battery cells onto each other or arranging the battery cells in a row. The cell stack may form one or more battery packs. The cell stack is disposed inside a cell stack frame. The cell stack frame exerts a pressure onto the cell stack. For example, the cell stack frame may include at least one end plate that exerts such a pressure. The cell stack frame may include two end plates and two side walls connecting the end plates, wherein one or both of the end plates may exert a pressure onto the cell stack. The cell stack arranged inside the cell stack frame may thus be delimited from four sides by the end plates and side walls. The cell stack frame may further include a top cover and a bottom cover such that the cell stack may be delimited from all six sides. The at least one end plate may be fixed to the side walls (and/or the top cover and bottom cover), for example riveted or screwed. The at least one end plate may be rigid, i.e. non-deformable. The cell stack frame may delimit the cell stack to an outside, i.e. to an environment of the cell stack. The at least one end plate may form an outer delimitation of the cell stack frame. Also, the other end plate and/or the side walls may form the outer delimitation of the cell stack frame. In other words, the cell stack frame, e.g. the two end plates and two side walls, may delimit an interior space of the cell stack frame from the exterior, wherein in the interior space the cell stack is arranged.

The battery system further includes a cooling structure. The cooling structure includes multiple cooling plates and is adapted to cool the battery cells via these cooling plates. Between each pair of battery cells one of the cooling plates is arranged. That is, the cooling plates and battery cells are arranged alternatingly. The cooling plates thus form cell spacers distancing neighboring battery cells from each other. The cooling plates may be considered to form part of the cell stack and are compressed by the cell stack frame along with the battery cells. In other words, the cell stack frame exerts a pressure not only onto the battery cells but also onto the cooling plates disposed in-between the battery cells. Each cooling plate includes two plate elements. A first plate element of the two plate elements may face and contact a first battery cell of the plurality of battery cells and second plate element of the two plate elements may face and contact a second battery cell of the plurality of battery cells. Each cooling plate has a cooling chamber through which a coolant, i.e. a cooling fluid, may be fed-through, e.g. pumped through, to cool the cooling plate and thus the adjacent battery cells during regular operation of the battery system. The cooling structure may thus ensure that the battery cells are kept within a required or intended temperature range for regular operation.

Further, according to the disclosure, the cooling plates each include a compression structure disposed inside the cooling chamber. The compression structure is adapted to deform based on an external pressure or force acting on the two plate elements. The cooling plates are therefore deformable. The compression structure may include, for example, struts or partition walls in-between the two plate elements which may interconnect the two plate elements. The struts between the two sides of the cooling plate may on the one hand prevent providing a direct load path and on the other hand provide a mostly even pressure distribution throughout the cooling plate. The compression structure, which is disposed inside the cooling chamber, is formed such that the flow of coolant through the cooling chamber is not substantially impaired. The compression structure may form cooling channels within the cooling chamber.

According to the disclosure, the compression structure is designed such that it is plastically deformed when receiving compression forces acting on the plate elements of the cooling plate. That is, the compression structure - and therefore the cooling plate - is plastically deformable or adapted to be plastically deformed. The compression structure is plastically deformable at least within an operational pressure range of the battery cells. In other words, the cooling plate has, due to the compression structure, a plastic deformation characteristic, for example a constant or substantially constant plastic deformation characteristic. In other words, the compression structure is designed such that when the cell stack is exerted to an increasing compression force, e.g. due to an aging-related expansion of the battery cells, the cooling plates will deform plastically at least within a pre-defined operational pressure range of the battery cells. That is, the battery cells of the cell stack receive a pre-tension by the cell stack frame, e.g. by an end plate of the cell stack frame pressing onto the cell stack, as explained above. The battery cells are thus under an operational pressure which should be kept within a pre-defined range, depending e.g. on the type, size and geometry of the battery cells, to ensure the intended operation of the battery cells. Over their lifetime, however, the battery cells may swell up due to aging effects, as mentioned introductorily, which - in known designs of battery systems - may increase the pressure inside the cell stack.

With the battery system according to the disclosure, however, this swelling of the battery cells is compensated at least in part by the plastically deformable compression structure. That is, while the battery cells swell up and thus increase in thickness, the cooling plates are compressed and thus decrease in thickness, for example by the same amount or almost the same amount as the battery cells are increasing in thickness. During this compression, the cooling plates exert not an increasing pressure onto the battery cells (as with known cell spacers having a progressive deformation characteristic) but substantially the same pressure over the entire compression range. That is, the compression structure is shaped or designed such that, in the designed compression/plastic deformation range, it does not allow for a direct load transfer between the plate elements. In other words, although the battery cells may swell up, the pressure inside the cell stack frame may remain substantially unchanged. This results in a constant or merely slight linear increasing force acting on the battery cells over a large range of compression distance/thickness reduction of the cooling plates and thus over a large range of age-related varying stack length of the cell stack. Thereby the cell stack may be safely kept within the ideal cell stack pre-tension range over its lifetime. In other words, the plastically deformable compression structure provides the battery system with a deformation characteristic which results in very similar compression forces independent of the cell stacks length deviations caused by production tolerances and/or swelling of the battery cells. In other words, the cell stack frame, due to the deformable cooling plates, may exert a constant compression force onto the cell stack in the relevant, advantageous pre-tensioning force range for prismatic or pouch type cells. Inevitable tolerances for both the elements of the cell stack as well as the elements of the cell stack frame can be compensated by the inherent deformation ability of the cooling plates. This may eliminate the need of additional shimming or other adjustment work during cell stacking. Further, any swelling (which may e.g. be due to ageing) of the battery cells of the cell stack may also be compensated. Further, as the compression structure is integrated into the cooling plates, the installation space is efficiently used as the cooling plates fulfill a double function of cooling the battery cells and of a plastically deformable cell spacer.

According to an embodiment, the cooling structure further includes curved connecting elements extending about end sides of the battery cells and interconnecting neighboring cooling plates of the plurality of cooling plates such that the cooling structure has a meandering form. In other words, the cooling plates of the cooling structure may form, together with the connecting elements, a continuous passage or channel for the coolant through the battery system. Therein, the coolant may flow from an inlet through the cooling plates and connecting elements to an outlet. As mentioned above, the cooling plates and battery cells are alternatingly arranged. Two neighboring cooling plates along with its interconnecting connecting element may thus form a meander inside of which one battery cell of the plurality of battery cells may be arranged. The compression structure may extend through the cooling plates only or also through the connecting elements. Such a meandering cooling structure may provide for a simple construction, for efficient cooling and - due to the compression structures - for the intended deformation characteristic.

According to an embodiment, the cooling structure further includes a fluid inlet element arranged at a first end of the cell stack and a fluid outlet element arranged a second end of the cell stack, wherein the cooling structure is adapted for the feed-through of the coolant from the fluid inlet element, through the cooling chambers of the cooling plates and out of the fluid outlet element. This embodiment may be suitable for the meandering cooling structure explained above, wherein then the cooling structure may be adapted for the feed-through of the coolant from the fluid inlet element, through the cooling chambers of the cooling plates and through the connecting elements and out of the fluid outlet element. The coolant may thus flow in series through the cooling plates. In other words, a single coolant flow is achieved through the whole cell stack. Alternatively, the cooling structure may include distribution channels extending along the stacking direction at the end side of the battery cells and connected to each of the cooling plates such that the coolant may flow parallel through the cooling plates. An outermost cooling plate of the plurality of cooling plates may include the fluid inlet and/or the fluid outlet. For example, a first outermost cooling plate at a first end of the cell stack may form the fluid inlet element and/or a second outermost cooling plate at a second end of the cell stack may form the fluid outlet element. Such a design of the cooling structure may provide for a simple design and effective cooling and deformation.

As mentioned above, the cell stack frame may include an end plate exerting pressure onto the cell stack. According to an embodiment, the end plate is shaped, at an inner side thereof facing and outermost one of the cooling plates, correspondingly to an adjacent side of the outermost cooling plate. For example, the end plate may be shaped correspondingly to an adjacent side of the cooling plate including the fluid inlet or the fluid outlet. Correspondingly may mean that the inner side of the end plate has a shape that corresponds to the shape of an outer surface of the outermost cooling plate such that a full-surface contact may be achieved between the end plate and the outermost cooling plate. The end plate may include a through-hole adapted to receive the fluid inlet or fluid outlet such that the fluid inlet or fluid outlet may extend through the end plate. The end plate being formed correspondingly to the cooling plate may allow for an efficient transfer of compression force or pressure from the end plate onto the outermost cooling plate and thus onto the cell stack.

According to an embodiment, the cooling plates are extruded plates. That is, the cooling plates including the compression structure may be formed by an extrusion process. The whole cooling structure may be formed via an extrusion process. The cooling plates including the compression structure or the whole cooling structure may be made of aluminum. For example, if the cooling plates are formed by an extrusion process, the cooling plates or the whole cooling structure may be formed by aluminum extrusion. Producing the cooling plates, or the whole cooling structure including the cooling plates and the connecting elements (if present), as extrusion profiles is particularly simple and efficient. The elements of the compression structure, such as cooling elements forming cooling channels inside the cooling chamber, may be formed in a constructively simple manner via extrusion. Also, such extrusion profiles provide for a stable construction while requiring a relatively small amount of material. Further, forming cooling plates and the compression structures therein may be formed in a single production step.

According to an embodiment, the compression structure includes multiple struts distributed about the inner surfaces of the two plate elements and extending in-between the two plate elements. The struts, or partition walls, may partition the inside of the cooling plates thereby forming cooling channels within the cooling chamber. The struts extend from a first plate element of the two plate elements of the cooling plate to a second plate element of the two plate elements of the cooling plate. The struts thus provide for transferring compression forces between the plate elements or through the cooling plate. The struts may form cooling elements, i.e. smaller entities within the compression structure which may be evenly distributed throughout the cooling plate. The struts or cooling elements may be deformable. That is, the struts or cooling elements may have a shape or form providing for the above-explained plastic deformability of the compression structure and thus of the cooling plate in a simple and effective manner. Various designs of struts or cooling elements are possible.

For example, according to an embodiment, the compression structure includes one or more of the following: compression elements having rectangular cross-sections, compression elements having bottle-neck shaped cross-sections, compression elements having semi-circular cross-sections, compression elements having tent-shaped cross-sections, compression elements having rhombus-shaped cross-sections, compression elements having rhombus-shaped cross-sections with circular end portions. The struts may be arranged such that these shapes of compression elements are formed. Compression elements having such cross-sections may allow for the intended plastic deformability of the compression structure in a simple manner.

The disclosure also pertains to an electric vehicle including a battery system according to the disclosure, i.e. a battery system as explained above.

### Specific Embodiments

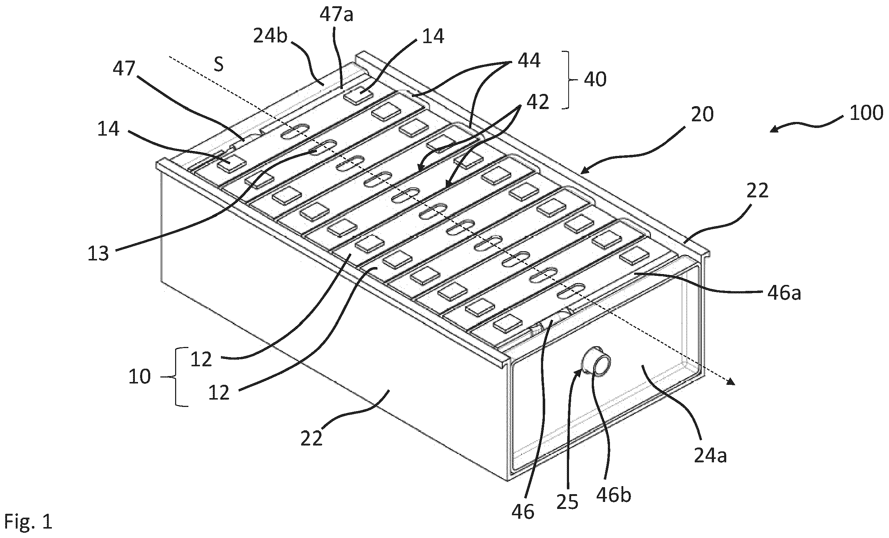

FIG. 1 to 3 illustrate a battery system 100 according to a first embodiment of the disclosure. The battery system 100 includes a plurality of prismatic battery cells 12 which are stacked along a stacking direction S so as to form a cell stack 10. The battery cells 12 may instead, for example, be pouch-type battery cells. Each of the battery cells 12, at a top side thereof, optionally includes cell terminals 14 for electrical interconnection and a venting opening 13 for allowing gas and particles to exit the respective battery cell 12 during a thermal runaway.

The battery system 100 further includes a cell stack frame 20 which accommodates the cell stack 10. The cell stack frame 20 includes side wall elements 22 disposed parallel to the stacking direction S, a first end plate 24a disposed at a first end of the cell stack 10 and a second end plate 24b disposed at a second end of the cell stack 10. The end plates 24a, 24b exert a pressure onto the cell stack 10 along the axis of the stacking direction S thereby compressing the cell stack 10.

Further, the battery system 100 includes a cooling structure 40 including a plurality of cooling plates 42 each arranged between adjacent battery cells 12 of the plurality of battery cells 12. In other words, the battery cells 12 and cooling plates 42 are alternately arranged. The cooling structure 40 further includes curved connecting elements 44 extending about lateral ends of the battery cells 12 and interconnecting neighboring cooling plates 42 such that the cooling structure 40 has a meandering form. In other words, the cooling structure 40 includes multiple meanders, each meander formed by two cooling plates 42 and the connecting element 44 connecting these two cooling plates 42, wherein inside each meander one of the battery cells 12 is located.

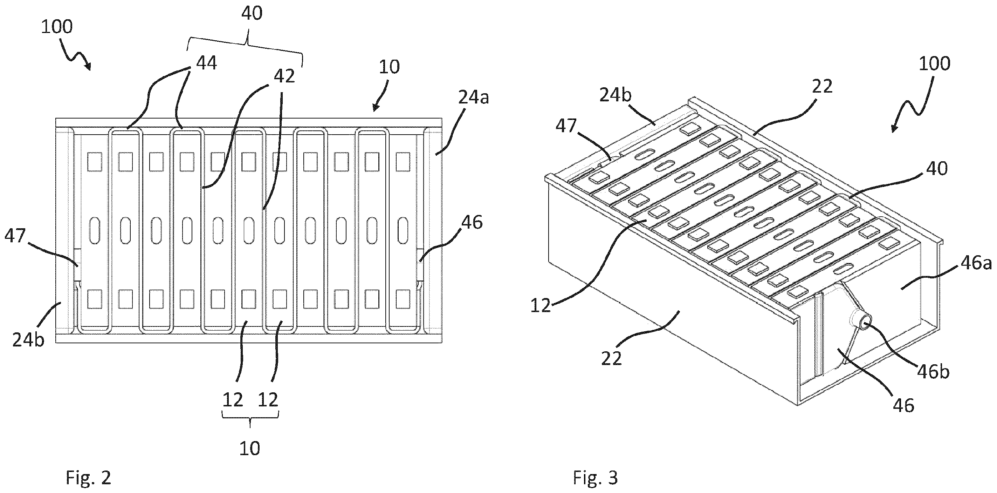

The cooling structure 40 further includes a fluid inlet element 46 arranged at the first end of the cell stack 10 and a fluid outlet element 47 arranged the second end of the cell stack 10. FIG. 3 shows the battery system 100 without the first end plate 24a and thus allows a view on the fluid inlet element 46. As shown, the fluid inlet element 46 is plate-shaped and includes a distancing portion 46a filling the gap between the outermost battery cell 12 and the first end plate 24a. The fluid outlet element 47 may also include a respective distancing portion 47a. The first end plate 24a is shaped, at an inner side thereof facing the fluid inlet element 46 (which may be understood as forming an outermost cooling plate), correspondingly to an adjacent side of the fluid inlet element 46. That is, the first end plate 24a flatly abuts the fluid inlet element 46 so as to provide a full contact over the entire surface area the fluid inlet element 46 which improves transfer of the compression force/pressure onto the fluid inlet element 46. The first end plate 24a includes a through-hole 25 through which an inlet 46b of the fluid inlet element 46 extends. Similarly, the second end plate 24b may include a through-hole through which an outlet of the fluid outlet element 47.

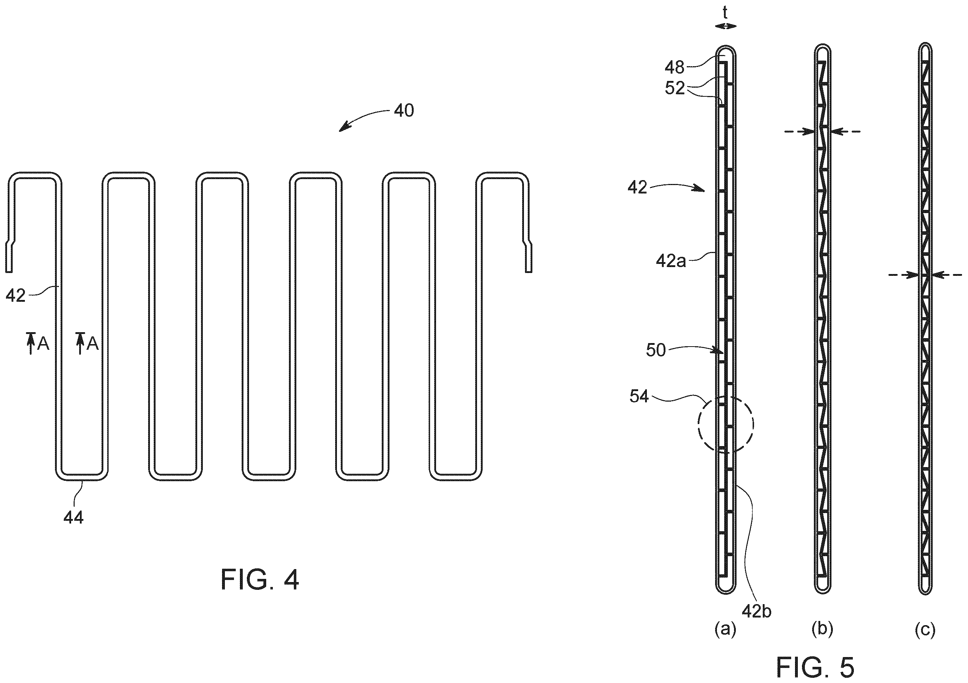

The cooling plates 42 each include two plate elements 42a, 42b with a cooling chamber 48 formed in-between for the feed-through of coolant, see for example FIG. 5. The cooling structure 40 is adapted for the feed-through of coolant from the fluid inlet element 46, through the cooling chambers 48 formed inside the cooling plates 42 and through the connecting elements 44, and out of the fluid outlet element 47. The coolant flow may be reversed, i.e. the fluid inlet element 46 may instead be the fluid outlet element and the fluid outlet element 47 may instead be the fluid inlet element. Thus, during regular operation of the battery system 100, coolant may flow through the meandering cooling structure 40 thereby cooling the battery cells 12 as these transfer heat to the cooling plates 42. The cooling plates 42 may therefore have a substantially full-surface contact to the adjacent battery cells 12 so that heat transfer is facilitated.

According to the disclosure, each of the cooling plates 42 further includes a compression structure 50 arranged inside the cooling chamber 48. The compression structure 50 includes multiple struts 52 distributed about the inner surfaces of the two plate elements 42a, 42b and extending in-between the two plate elements 42a, 42b as shown in FIG. 5 which illustrates a cross-section along the lines A-A of FIG. 4 through one of the cooling plates 42. As can be seen in FIG. 5, the struts 52 are arranged in a repeated pattern along cooling plate 42 wherein the elements of this pattern are herein denoted as compression elements 54. In other words, the cooling structure 50 includes multiple compression elements 54 which are made up from struts 52.

In the embodiment of FIG. 5, the compression elements 54 include two struts 52 extending perpendicularly from the plate element 42a and one strut 52 extending perpendicularly from the plate element 42b, wherein these three struts 52 are interconnected via another strut 52 which extends parallel to the plate elements 42a, 42b. The struts 52 form cooling channels through which the coolant may flow through the cooling chamber 48. That is, the compression structure 50 does not hinder the flow of the coolant through the cooling chamber 48.

The compression structure 50 is designed such that it is plastically deformed when receiving compression forces acting on the plate elements 42a, 42b of the cooling plate 42. That is, the compression elements 54, due to their struts 52, are deformable in reaction to a compression force or pressure which is indicated in FIG. 5 via dashed arrows. In FIG. 5a, the cooling plate 42 is shown in a non-compressed state. As can be seen, the struts 52 form channels of rectangular cross-section in this non-compressed state. In FIG. 5b, the cooling plate 42 is shown in a state where a first compression force acts on the cooling plate 42 compressing the same as indicated by the dashed arrows. This results in a deformation of the compression elements 54. For example, the strut 52 which in the non-compressed state extended parallel to the plate elements 42a, 42b is deformed and pressed towards the plate elements 42a. Thus, a thickness t of the cooling plate 42 is reduced. In FIG. 5c, the cooling plate 42 is shown in a state where a second compression force acts, the second compression force being higher than the first compression force. The cooling plate 42 is thus compressed even further such that the strut 52 which in the non-compressed state extended parallel to the plate elements 42a, 42b is deformed such that is contacts the inner surface of the plate element 42a. Thus, the thickness t of the cooling plate 42 is further reduced. Up until such a compression, the struts 52 may deform plastically.

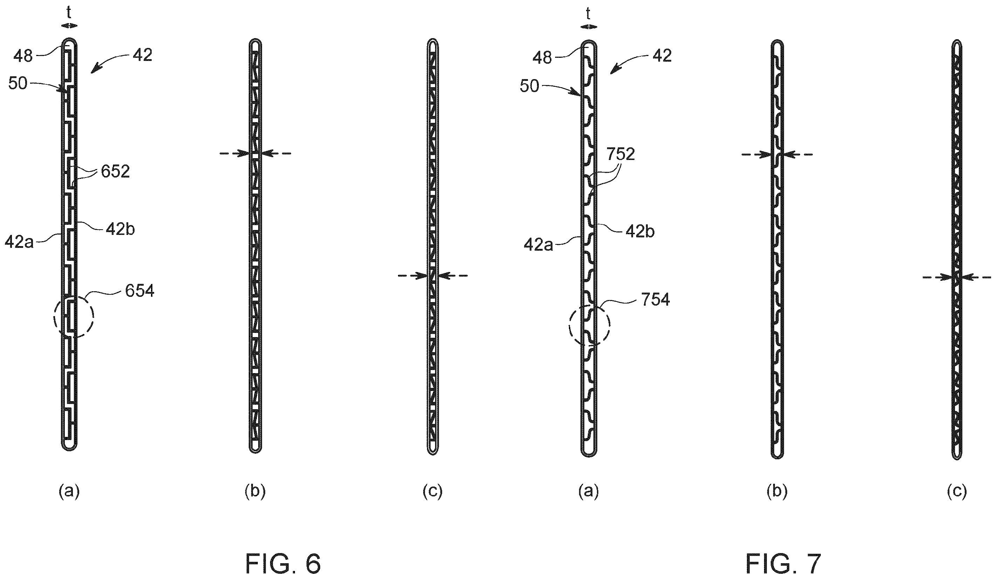

The compression structure 50 of FIG. 5 is merely an exemplary embodiment. Alternative embodiments are shown in FIG. 6 to 8.

In FIG. 6, compression elements 654 are formed similar as the compression elements 54 of FIG. 5 but without being interconnected. That is, strut 652 which in the non-compressed state extends parallel to the plate elements 42a, 42b does not form a single strut for all the compression elements 654. The deformation of the compression elements 654 is similar to the deformation of the compression elements 54 of FIG. 5 as can be seen in FIG. 6. FIG. 6a shows the cooling plate 42 in a non-compressed state, FIG. 6b shows the cooling plate 42 in a first compressed state and FIG. 6c shows the cooling plate 42 in a second, further compressed state. As illustrated, a thickness t of the cooling plate 42 is reduced as the cooling plate 42 is compressed. Up until such a compression, the struts 652 may deform plastically.

In FIG. 7, compression elements 754 have bottle-neck shaped cross-sections formed by struts 752. FIG. 7a shows the cooling plate 42 in a non-compressed state, FIG. 7b shows the cooling plate 42 in a first compressed state and FIG. 7c the cooling plate 42 in a second, further compressed state. As illustrated, a thickness t of the cooling plate 42 is reduced as the cooling plate 42 is compressed. Up until such a compression, the struts 752 may deform plastically.

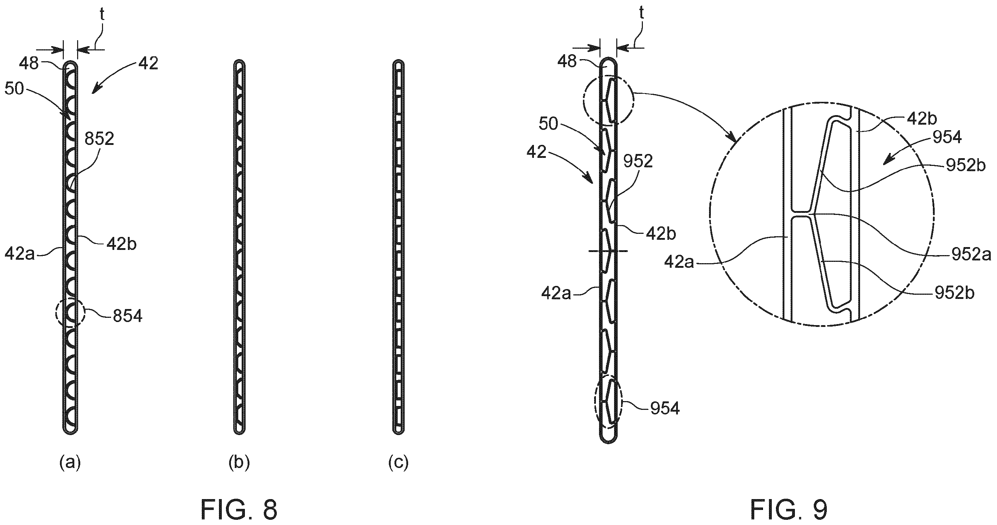

In FIG. 8, compression elements 854 have semi-circular cross-sections formed by struts 852. FIG. 8a shows the cooling plate 42 in a non-compressed state, FIG. 8b show the cooling plate 42 in a first compressed state and FIG. 8c the cooling plate 42 in a second, further compressed state. As illustrated, a thickness t of the cooling plate 42 is reduced as the cooling plate 42 is compressed. Up until such a compression, the struts 852 may deform plastically.

In FIG. 9, compression elements 954 have tent-shaped cross-sections formed by struts 952. FIG. 9 shows the cooling plate 42 in a non-compressed state. The thickness t of the cooling plate 42 is reduced as the cooling plate 42 is compressed, same as with the above-explained embodiments, wherein here the struts 952 deform plastically until a middle strut 952a extending from the plate element 42a contacts the opposite plate element 42b and side struts 952b extending from the plate element 42b contact the opposite plate element 42a.

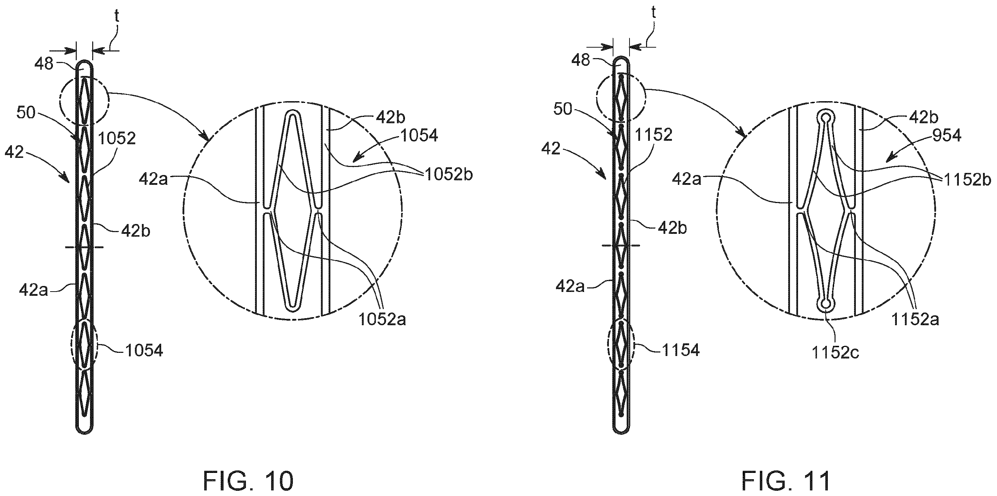

In FIG. 10, compression elements 1054 have rhombus-shaped cross-sections formed by struts 1052. FIG. 10 shows the cooling plate 42 in a non-compressed state. The thickness t of the cooling plate 42 is reduced as the cooling plate 42 is compressed, same as with the above-explained embodiments, wherein here the struts 1052 deform plastically until middle struts 1052a extending from each of the plate elements 42a, 42b contact each other and/or until side struts 1052b contact the respective plate elements 42a, 42b closest to them.

In FIG. 11, compression elements 1154 have rhombus-shaped cross-sections with circular end portions 1152c formed by struts 1152. FIG. 11 shows the cooling plate 42 in a non-compressed state. The thickness t of the cooling plate 42 is reduced as the cooling plate 42 is compressed, same as with the above-explained embodiments, wherein here the struts 1152 deform plastically until middle struts 1152a extending from each of the plate elements 42a, 42b contact each other and/or until side struts 1152b contact the respective plate elements 42a, 42b closest to them and/or until circular end portions 1152c contact the plate elements 42a, 42b.

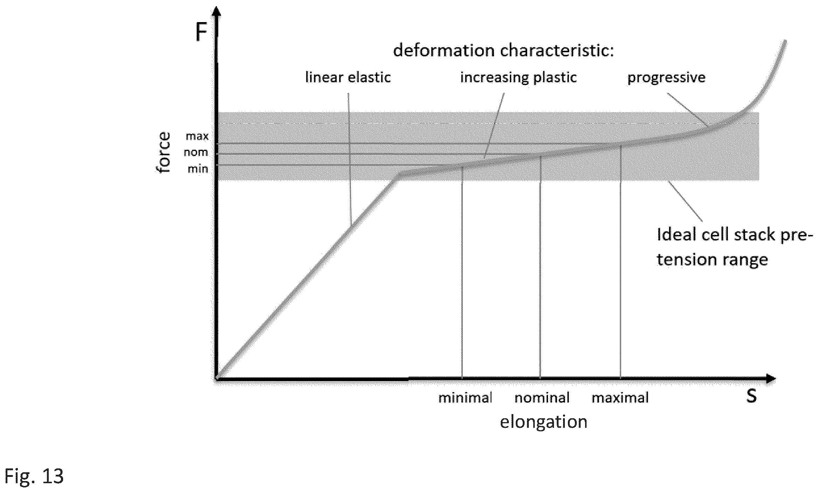

In all the above-described embodiments, the compression structure 50 is designed such that it is plastically deformed when receiving compression forces acting on the plate elements 42a, 42b of the cooling plate 42. That is, the compression structure 50 - and therefore the cooling plate 42 - is plastically deformable at least within an operational pressure range of the battery cells. In other words, the cooling plate has, due to the compression structure, a plastic deformation characteristic, for example a constant or substantially constant plastic deformation characteristic. This is shown in FIG. 13. The cooling structure 40 including the cooling plates 42, the connecting elements 44 and the compression structure inside the cooling plates 42 may be formed via extrusion, may for example be aluminum extrusion profiles. The compression structures 50, in the designed compression/plastic deformation range, do not allow for a direct load transfer between the plate elements 42a, 42b until the struts come into contact with the respective opposite plate elements 42a, 42b.

Generally, the battery cells 12 of the cell stack 10 receive a pre-tension by the end plates 24a, 24b as mentioned above. The battery cells 12 are thus under an operational pressure which should be kept within a pre-defined range, depending, e.g., on the type, size and geometry of the battery cells, to ensure the intended operation of the battery cells 12. Over their lifetime, however, the battery cells 12 may swell up due to aging effects which - in known designs of battery systems - may increase the pressure inside the cell stack. With the battery system 100 according to the disclosure, however, this swelling of the battery cells 12 is compensated at least in part by the plastically deformable compression structure 50. That is, while the battery cells 12 swell up and thus increase in thickness, the cooling plates 42 are compressed and thus decrease in thickness.

During this compression, the cooling plates 42 exert not an increasing pressure onto the battery cells (as with known cell spacers having a progressive deformation characteristic) but substantially the same pressure over the entire compression range as shown in FIG. 13. That is, the compression structure 50 is shaped or designed such that, in the designed compression/plastic deformation range, it does not allow for a direct load transfer between the plate elements 42a, 42b.

FIG. 13 illustrates a diagram showing a force F to elongation (displacement) s ratio for the cooling plate 42 including the compression structure 50. As shown, the exerted force F increases linearly (elastic deformation) with the elongation s of the battery cells 12 (and thus stack length L) in a first section, at lower forces, and stays substantially constant or merely slightly increases linearly (plastic deformation) in a second section, at higher forces. The compression force (and thus the pressure) force stays within a window or range of an ideal cell stack pre-tension even when the battery cells 12 swell-up due to ageing. Further, at even higher elongation s, the exerted force F increases progressively. That is, while the compression structure 50 may not allow for a direct load transfer between the plate elements 42a, 42b in the designed compression/plastic deformation range, when the cooling structure 40 is compressed beyond its intended deformation, the compression structure 50 gets compressed (e.g., most or all of the struts 52, 752, 852 start to directly contact or abut both the cooling plates 42), drastically altering the compression forces load path. The compression force F can then travel almost straight from one side to the other, i.e. from one plate element 42a to the other plate element 42b, which leads to a stiffening of the compression structure 50 and prevents the total collapse of the cooling channels in the inside of the cooling structure 40, even if larger swelling forces/displacements than designed for occur.

Thus, the end plates 24a, 24b may, due to the cooling plates 42 with their internal compression structures 50, exert a constant compression force onto the cell stack 10. Therefore, production tolerances as well as swelling forces/displacements of the battery cells 12 over the lifetime of the battery system 100 may be effectively compensated without an increase in pressure. The compression structures 50 are designed such that the min-max cell stack tolerances stay in the flat plateau area of the force/deflection curve as shown in FIG. 13. The flat plateau may be provided by the plastic deformation of the compression structures 50 of the cooling plates 42. Thus, the cell stack 10 may be kept in the optimum range of pressure for peak performance ensuring reliable and safe operation through all its life cycle until end of life.

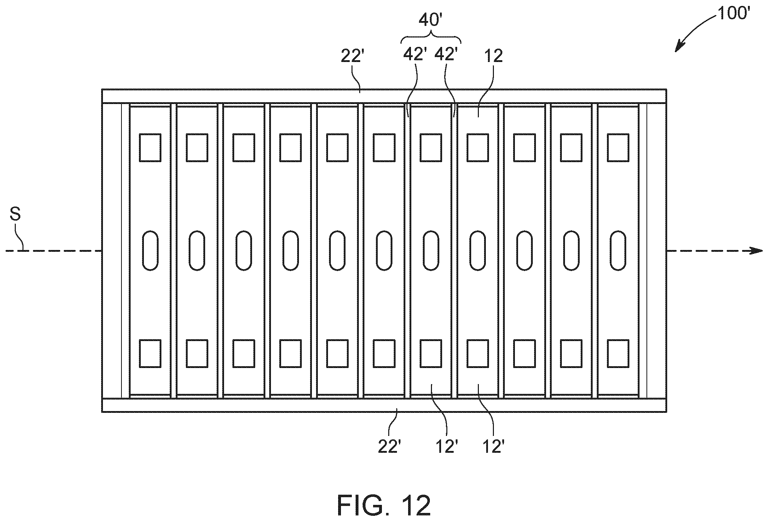

FIG. 12 shows a battery system 100' according to an alternative embodiment of the disclosure. In the battery system 100', a cooling structure 40' is not of a meandering form. That is, the cooling structure 40' does not include connecting elements for interconnecting cooling plates 42' but instead the cooling plates 42' may be supplied with coolant in a different manner. For example, separate supply lines (not shown) for coolant may be provided extending through one of the side wall elements 22' and connected to the cooling plates 42' and/or separate discharge lines (not shown) for the coolant may be provided extending through the other one of the side wall elements 22' and connected to the cooling plates 42'. Alternatively, a common supply line (not shown) may be provided extending parallel to the stacking axis S along the end sides of battery cells 12' and connected to all the cooling plates 42' at their first ends and/or a common discharge line (not shown) may be provided extending parallel to the stacking axis S along the other end sides of the battery cells 12' and connected to all the cooling plates 42' at their second ends.

### Reference signs

- 10: cell stack
- 12: battery cells
- 13: venting openings
- 14: cell terminals
- 20: cell stack frame
- 22: side wall elements
- 24a: first end plate
- 24b: second end plate
- 25: through-hole
- 40: cooling structure
- 42: cooling plates
- 42a: plate element
- 42b: plate element
- 44: connecting elements
- 46: fluid inlet element
- 46a: distancing portion
- 46b: inlet nozzle
- 47: fluid outlet element
- 47a: distancing portion
- 48: cooling chambers
- 50: compression structure
- 52: struts
- 54: compression elements
- 100: battery system
- 652: struts
- 654: compression elements
- 752: struts
- 754: compression elements
- 852: struts
- 854: compression elements
- 952: struts
- 952a: strut
- 952b: struts
- 954: compression elements
- 1052: struts
- 1052a: strut
- 1052b: struts
- 1054: compression elements
- 1152: struts
- 1152a: strut
- 1152b: struts
- 1152c: circular end portion
- 1154: compression elements
- S: stacking direction

## Claims

1. A battery system (100), comprising:
a plurality of battery cells (12) arranged to form a cell stack (10),
a cell stack frame (20) accommodating the cell stack (10) and exerting a pressure onto the cell stack (10),
a cooling structure (40) comprising a plurality of cooling plates (42) each arranged between adjacent battery cells (12) of the plurality of battery cells (12), wherein each cooling plate (42) comprises,
two plate elements (42a, 42b) with a cooling chamber (48) in-between for the feed-through of coolant, and
a compression structure (50) arranged inside the cooling chamber (48), wherein the compression structure (50) is designed such that it is plastically deformed when receiving compression forces acting on the plate elements (42a, 42b) of the cooling plate (42).

2. The battery system (100) as claimed in claim 1, wherein the cooling structure (40) further comprises curved connecting elements (44) extending about end sides of the battery cells (12) and interconnecting neighboring cooling plates (42) of the plurality of cooling plates (42) such that the cooling structure (40) has a meandering form.

3. The battery system (100) as claimed in any one of the preceding claims, wherein the cell stack frame (20) comprises an end plate (24a, 24b) exerting pressure onto the cell stack (10).

4. The battery system (100) as claimed in claim 3, wherein the end plate (24a, 24b) is shaped, at an inner side thereof facing an outermost one of the cooling plates, correspondingly to an adjacent side of the outermost cooling plate.

5. The battery system (100) as claimed in any one of the preceding claims, wherein the cooling structure (40) further comprises a fluid inlet element (46) arranged at a first end of the cell stack (10) and a fluid outlet element (47) arranged a second end of the cell stack (10), wherein the cooling structure (40) is adapted for the feed-through of the coolant from the fluid inlet element (46), through the cooling chambers (48) of the cooling plates (42) and out of the fluid outlet element (47).

6. The battery system (100) as claimed in any one of the preceding claims, wherein the cooling plates (42) are extruded plates.

7. The battery system (100) as claimed in any one of the preceding claims, wherein the cooling plates (42) are made of aluminum.

8. The battery system (100) as claimed in any one of the preceding claims, wherein the compression structure (50) comprises multiple struts (52, 652, 752, 852, 952, 1052, 1152) distributed about the inner surfaces of the two plate elements (42a, 42b) and extending in-between the two plate elements (42a, 42b).

9. The battery system (100) as claimed in any one of the preceding claims, wherein the compression structure (50) comprises one or more of the following: compression elements (54, 654) having rectangular cross-sections, compression elements (754) having bottle-neck shaped cross-sections, compression elements (854) having semi-circular cross-sections, compression elements (954) having tent-shaped cross-sections, compression elements (1054) having rhombus-shaped cross-sections, compression elements (1154) having rhombus-shaped cross-sections with circular end portions (1152c).

10. An electric vehicle comprising the battery system (100) as claimed in any one of the preceding claims.

## Amended claims

### Amended claims in accordance with Rule 137(2) EPC.

1. A battery system (100), comprising:
a plurality of battery cells (12) arranged to form a cell stack (10),
a cell stack frame (20) accommodating the cell stack (10) and exerting a pressure onto the cell stack (10),
a cooling structure (40) comprising a plurality of cooling plates (42) each arranged between adjacent battery cells (12) of the plurality of battery cells (12), wherein each cooling plate (42) comprises, two plate elements (42a, 42b) with a cooling chamber (48) in-between for the feed-through of coolant,
**characterized in that** each cooling plate (42) further comprises a compression structure (50) arranged inside the cooling chamber (48), wherein the compression structure (50) is designed such that it is plastically deformed when receiving compression forces acting on the plate elements (42a, 42b) of the cooling plate (42).

2. The battery system (100) as claimed in claim 1, wherein the cooling structure (40) further comprises curved connecting elements (44) extending about end sides of the battery cells (12) and interconnecting neighboring cooling plates (42) of the plurality of cooling plates (42) such that the cooling structure (40) has a meandering form.

3. The battery system (100) as claimed in any one of the preceding claims, wherein the cell stack frame (20) comprises an end plate (24a, 24b) exerting pressure onto the cell stack (10).

4. The battery system (100) as claimed in claim 3, wherein the end plate (24a, 24b) is shaped, at an inner side thereof facing an outermost one of the cooling plates, correspondingly to an adjacent side of the outermost cooling plate.

5. The battery system (100) as claimed in any one of the preceding claims, wherein the cooling structure (40) further comprises a fluid inlet element (46) arranged at a first end of the cell stack (10) and a fluid outlet element (47) arranged a second end of the cell stack (10), wherein the cooling structure (40) is adapted for the feed-through of the coolant from the fluid inlet element (46), through the cooling chambers (48) of the cooling plates (42) and out of the fluid outlet element (47).

6. The battery system (100) as claimed in any one of the preceding claims, wherein the cooling plates (42) are extruded plates.

7. The battery system (100) as claimed in any one of the preceding claims, wherein the cooling plates (42) are made of aluminum.

8. The battery system (100) as claimed in any one of the preceding claims, wherein the compression structure (50) comprises multiple struts (52, 652, 752, 852, 952, 1052, 1152) distributed about the inner surfaces of the two plate elements (42a, 42b) and extending in-between the two plate elements (42a, 42b).

9. The battery system (100) as claimed in any one of the preceding claims, wherein the compression structure (50) comprises one or more of the following: compression elements (54, 654) having rectangular cross-sections, compression elements (754) having bottle-neck shaped cross-sections, compression elements (854) having semicircular cross-sections, compression elements (954) having tent-shaped cross-sections, compression elements (1054) having rhombus-shaped cross-sections, compression elements (1154) having rhombus-shaped cross-sections with circular end portions (1152c).

10. An electric vehicle comprising the battery system (100) as claimed in any one of the preceding claims.
